(19) Europäisches Patentamt

European Patent Office

Office européen des brevets

(11) **EP 0 578 842 B1**

(12) **EUROPÄISCHE PATENTSCHRIFT**

(45) Veröffentlichungstag und Bekanntmachung des Hinweises auf die Patenterteilung:
**18.09.1996 Patentblatt 1996/38**

(51) Int. Cl.$^6$: **B65G 27/30**

(21) Anmeldenummer: **92111834.5**

(22) Anmeldetag: **11.07.1992**

(54) **Vibrations-Linearförderer**

Linear-vibratory conveyor

Convoyeur vibrant à déplacement linéaire

(84) Benannte Vertragsstaaten:
**CH DE ES FR GB IT LI SE**

(43) Veröffentlichungstag der Anmeldung:
**19.01.1994 Patentblatt 1994/03**

(73) Patentinhaber: **Schindler, Peter**
**D-97631 Bad Königshofen (DE)**

(72) Erfinder: **Schindler, Peter**
**D-97631 Bad Königshofen (DE)**

(56) Entgegenhaltungen:
EP-A- 0 402 495         DE-A- 3 241 145
DE-A- 3 642 183         FR-A- 2 050 234

- PATENT ABSTRACTS OF JAPAN vol. 8, no. 274 (M-345)(1711) 14. Dezember 1984
- PATENT ABSTRACTS OF JAPAN vol. 9, no. 179 (M-399)(1902) 24. Juli 1985

## Beschreibung

Die Erfindung betrifft einen VIBRATIONS-LINEARFÖRDERER nach dem Oberbegriff des Anspruchs 1. Er wird in der Handhabetechnik, einem peripheren Bereich der Industrierobotertechnik, eingesetzt und dient ganz allgemein zum Fördern von Werkstücken, welche ein Schiebeförderer z.B. nach der DE-A-30 15 785 aus dem Schüttgut dosiert auf den Vibrations-Linearförderer bringt, um es auf dieser Strecke zu richten, zu puffern oder bei Falschlage mit werkstückspezifschen Schikanen und Richthilfen abzuweisen.

Der VIBRATIONS-LINEARFÖRDERER ist ein krafterregtes Zweimassen-Schwingsystem und arbeitet in der Nähe der Resonanzfrequenz, um eine optimale Energieausnutzung zu erreichen.

Die Nutzmasse besteht üblicherweise aus der Förderrinne, den zu fördernden Werkstücken und der Aufhängung. Die Gegenmasse ist parallel dazu angeordnet. Nutzmasse und Gegenmasse sind direkt über schrägstehende Lenkerfedergruppen miteinander verbunden. Der z.B. magnetische Vibrationsantrieb befindet sich zwischen Nutz- und Gegenmasse, wobei das Magnetjoch an der Nutzmasse und die Magnetspule an der Gegenmasse in einem genau definierten Abstand zueinander fixiert sind. Wird der Magnet mit einer sinusförmigen Spannung beaufschlagt, so führt die Nutzmasse bedingt durch die schrägstehenden Lenkerfedern. eine schrägstehende Schwingbewegung aus. Die zu fördernden Werkstücke werden hierbei soweit vertikal beschleunigt, daß sie vom Förderrinnenboden abheben und im Mikrosprung eine bogenförmige Bewegungslinie beschreiben. Die durch den gegensinnigen Bewegungs- bzw. Beschleunigungsverlauf von Nutz- und Gegenmasse entstehenden Schwingkräfte wirken einander entgegen, befinden sich aber auf unterschiedlichen Wirklinien.

Dies bewirkt, daß zwischen den versetzten Schwerpunkten der Nutz- und Gegenmasse gegensinnige Kräfte auftreten, welche eine Kippschwingung des Gesamtsystems hervorrufen. Diese Kippschwingungen übertragen sich auf benachbarte Maschinenteile bzw. auf das Maschinengestell und führen zu erhöhter Lärmentwicklung und zu einer unkontrollierbaren zusätzlichen Rückkopplung und damit zu einer Schwingungsüberlagerung, wodurch das Förderverhalten der Werkstücke über die gesamte Förderstrecke ungleichmäßig und lärmintensiv wird. Zusätzlich verringert sich auch die Förderleistung entsprechend.

Aus der DE-A-36 42 183 ist ein VIBRATIONS-LINEARFÖRDERER bekannt, welcher die aufgeführten Nachteile dahingehend zu beheben versucht, daß die Nutzmasse und die Gegenmasse annähernd gleich groß sind und sich der Schwerpunkt der Nutz- und Gegenmasse auf der gleichen Wirklinie befindet und daß das gesamte Schwingsystem symmetrisch angeordnet ist. Damit sollen keine Kräfte nach außen auftreten, und das System soll nach außen geschlossen sein. Auch dieser VIBRATIONS-LINEARFÖRDERER arbeitet in Resonanznähe und wird durch Verstellen der freien Federlänge entsprechend abgestimmt. Nachteilig ist hier, daß sich durch die gegensinnige Bewegung der Nutz und Gegenmasse jeweils die Amplituden entsprechend der Spaltweite zwischen Joch und Magnet halbieren. Folglich können mit diesem System nur kleine Massen auf kurzen Sortierschienen gefördert werden. Das System arbeitet aus diesem Grunde sehr hart.

Aus dem Dokument JP-A-59-14966 ist ein Vibrations-Linearförderer gemäß dem Oberbegriff des Anspruchs 1 bekannt.

Aufgabe der Erfindung ist es, einen VIBRATIONS-LINEARFÖRDERER zu schaffen, bei dem keine störenden Kippschwingungen bzw. Schwingungsüberlagerungen bei dem Gesamtsystem auftreten oder nach außen auf das Maschinengestell übertragen werden und eine weiche und lärmarme sowie schonende Förderung von Werkstücken ermöglicht wird und bei dem eine feinfühlige Abstimmung der Eigenschwingfrequenz und damit der Fördergeschwindigkeit erfolgt.

Die Lösung dieser Aufgabe erfolgt mit den im kennzeichnenden Teil des Anspruchs 1 angegebenen Maßnahmen. Vorteilhafte Weiterbildungen enthalten die Ansprüche 2 bis 8.

Durch die Erfindung wird ein VIBRATIONS-LINEARFÖRDERER geschaffen, der es ermöglicht, daß das System mit niedriger Frequenz und weicher Federkonstante und damit großer Amplitude der Nutzmasse arbeitet. Hierdurch wird eine weiche Förderung der Werkstücke erreicht.

Die Bewegungslinie der Nutzmasse ist dabei über eine große Wegstrecke mit dem freien Wurfbogen des Werkstücks nahezu deckungsgleich, weshalb das Werkstückgewicht höher sein kann. Die nahezu deckungsgleiche Bewegungslinie ergibt sich durch die sich verlagernden Umlenkendpunkte an den Bewegungspunkten A bzw. B. Dadurch wird eine größere Vertikalbeschleunigung an der Förderrinne und damit am zu sortierenden Teil am Bewegungsbeginn erzielt, die auch eine geräuscharme, schonende und schnellere Beförderung der Werkstücke ergibt. Die Sortierstrecke kann auch länger sein, als dies mit den Systemen des Standes der Technik möglich war, wobei das Schwingsystem vom Maschinengestell entkoppelt ist.

Die Abstimmung des Systems in Resonanznähe wird dadurch genauer und von der Bedienbarkeit einfacher, weil sie über eine spezielle mikroprozessorgesteuerte Frequenzregelung mit Tastatur und Klartextanzeige digital in sehr kleinen Frequenzsprüngen eingestellt werden kann. Damit kann auch die Fördergeschwindigkeit der Werkstücke sehr feinfühlig verändert werden. Beim Stand der Technik wird die Abstimmung durch Verkürzen bzw. Verlängern der Einspannlänge der Lenkerfedern erreicht, was zeitaufwendig und umständlich ist.

Durch das Hintereinanderschalten mehrerer Lenkerfederpakete können Sortierschienenlängen über 2 Meter ausgeführt werden. Das zu fördernde Gesamtwerkstückgewicht auf der Förderschiene kann mehr als 20 N betragen. Mit dem System werden Förderleistungen von mehr als 15 m/min möglich.

Die Erfindung soll an einem Ausführungsbeispiel erläutert werden.

Es zeigt:

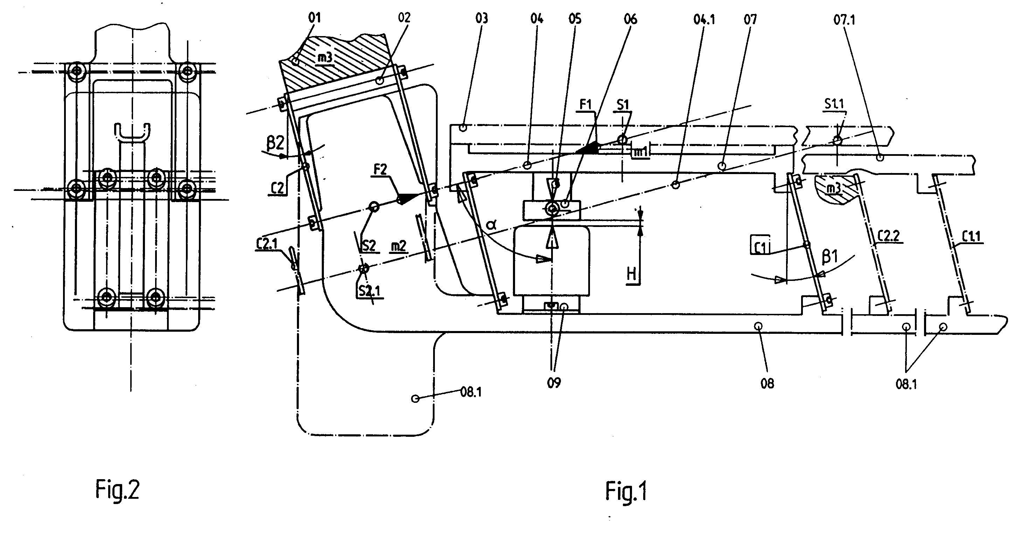

Fig. 1      eine Seitenansicht eines erfindungsgemäßen Linearförderers

Fig. 2      eine Vorderansicht eines erfindungsgemäßen Linearförderers

Fig. 3      ein Bewegungsschema eines erfindungsgemäßen Linearförderers

Fig. 4      ein schematisches Schwingungsersatzschaltbild

Fig. 5      ein Bewegungsschema im Vergleich alt zu neu.

Die Förderrinne 03 mit Schwingbalken 07 und Magnetjoch 06 sowie die zu fördernden Werkstücke bilden die Nutzmasse m1 des Systems. Sie ist über mehrere schrägstehende Lenkerfedern c1 (welche zu Gruppen zusammengefaßt sind) mit der Gegenmasse m2 verbunden. Die Gegenmasse m2 besteht aus dem Unterbau 08 und der Magnetspule 09. Der Unterbau 08 ist über eine zweite Lenkerfedergruppe c2 mittels einer Traverse 02 am Maschinengestell m3 bzw. Fundament 01 befestigt.

Die Massenschwerpunkte s1 der Nutzmasse m1 und der Schwerpunkt s2 der Gegenmasse m2 liegen auf der gleichen Wirklinie 04, wobei das Massenverhältnis m1 zu m2 mindestens 1:2 oder größer ausgelegt ist. Bei gleicher Federkonstante der Lenkerfedergruppen c1 und c2 und bei einem Massenverhältnis m1:m2 = 1:2 beträgt die Amplitude von m1 das zweifache der Amplitude von m2. Bei größerem Massenverhältnis wird auch die Amplitude entsprechend größer. Als vorteilhaft hat sich ein Verhältnis von 1:5 erwiesen, wobei die Beziehung m1*A = m2*B besteht.

Wird die Förderrinne 03 mit dem Schwingbalken 7.1 über eine oder mehrere Lenkerfederpakete c1.1 mit der Gegenmasse 08.1 entsprechend verlängert, so verlagern sich die Massenschwerpunkte auf die Ebene s1.1, s2.1. Entsprechend verlagert sich die Wirklinie 04.1 und damit das zweite Lenkerfederpaket c2.1 nach unten. Diese Verlagerung wird durch eine einfache Tieferlegung der Lenkerfederbefestigung erreicht.

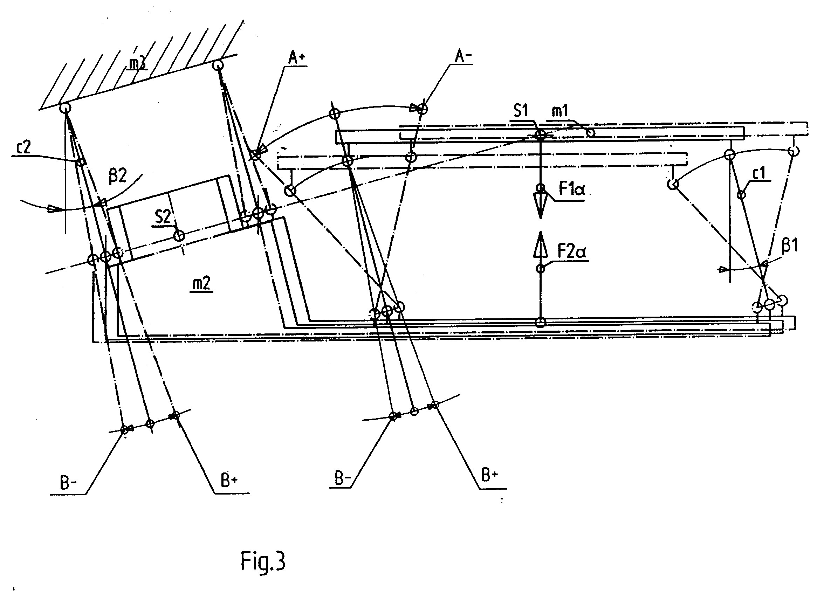

Um auf eine große Amplitude (kleine Frequenz) zu kommen, wird die Federkonstante des Systems sehr niedrig angesetzt, indem weiche Lenkerfedern verwendet werden. Begrenzt wird die Federkonstante durch die benötigte statische/dynamische Stabilität des Systems. Die Kraftrichtung $F1\alpha, F2\alpha$ zwischen Magnetjoch 06 und Magnetspule 09 ist zur Bewegungsrichtung oder Wirklinie der Nutz-und Gegenmasse unter einem Winkel $\alpha$ angeordnet, wodurch sich eine Vervielfachung der Nutzmassenamplitude im Vergleich zum Luftspalt H ergibt. Die Aufhängung der Gegenmasse m2 mittels der Lenkerfedergruppe c2 erfolgt in der durch die Schwerpunkte s1 und s2 verlaufenden Ebene. Damit werden die Schwingungen der Massen m1 und m2 kompensiert. Das Zweimassenschwingsystem ist in diesem Verhältnis als geschlossen anzusehen, unabhängig von der Anordnung des Schwingantriebes 06, 09. Die Kräfte F1 und F2 wirken entgegengesetzt auf der gleichen Wirkebene als gleichgroße Größen und heben sich auf. Die Lenkerfeder-Aufhängung von Nutz- und Gegenmasse ist dabei derart, daß die Auslenkung (A) der Lenkerfedergruppe c1 an der Nutzmasse m1 gegenläufig zur Auslenkung (B) der Lenkerfedergruppe c2 an der Gegenmasse m2 verläuft und die Auslenkung der Lenkerfedergruppe c1 und c2 an der gemeinsamen Gegenmasse m2 nach Auslenkung B mit gleichem Bewegungsbogen erfolgt. In Fig. 3 sind diese Schwingbewegungsverläufe dargestellt. Bei gleicher Federkonstante beider Lenkerfedergruppen heißt dies, daß die Nutz-und Gegenmasse eine gegensinnige Bewegungscharakteristik aufweisen, welche aus den entgegengesetzt wirkenden Kräften F1 und F2 herrührt.

Die Aufhängung der Lenkerfedergruppe c2 geht durch den Schwerpunkt s2 von m2 und liegt damit auf der gemeinsamen Wirklinie von m1 und m2. Es treten dadurch keine zusätzlich überlagerten Schwingungen nach außen auf das Gestell 01 auf. Bei sehr langen Sortiersystemen ist zusätzlich zur Längsstabilisierung ein Lenkerfederpaket c2.2 von m2 zu m3 vorzusehen.

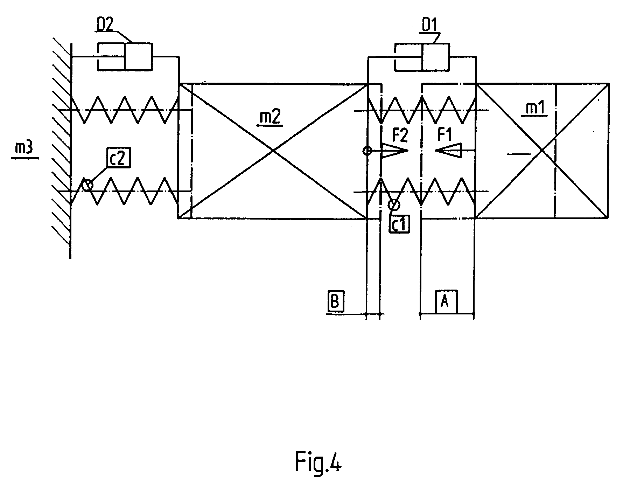

Fig. 4 zeigt das Schwingungsersatzbild des VIBRATIONS-LINEARFÖRDERERS mit den drei Massen m1,m2,m3; den zwei Federsystemen c1,c2 sowie die Dämpfungen d1,d2 des Systems und den Antrieb F1,F2. Die Auslenkung A,B ist ebenfalls angeführt.

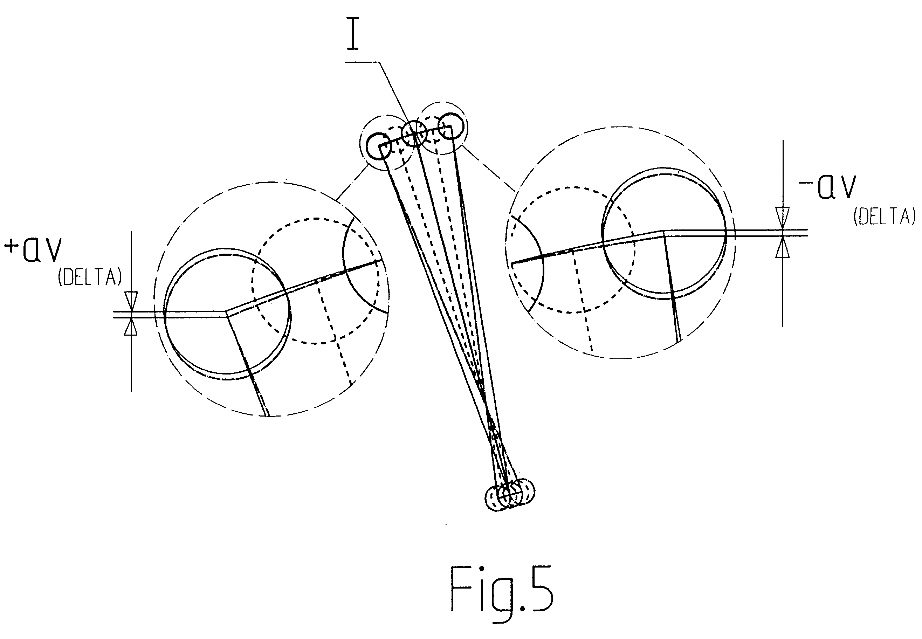

Fig. 5 zeigt ein Bewegungsschema im Vergleich eines bekannten (Vollstrich) mit dem erfindungsgemäßen System (gestrichelt). Durch die neue kinematische Anordnung der Massen zu den Lenkerfedergruppen wird eine höhere Vertikalbeschleunigung am Anfang von A+ nach A- erreicht, woraus sich eine höhere Fördergeschwindigkeit des Sortiergutes ergibt. Die Wegdifferenz der beiden Systeme ist mit +av sowie -av bezeichnet. Im Punkt-I sind beide Systeme deckungsgleich.

## Patentansprüche

1.    Vibrations-Linearförderer zum Fördern, Richten, Abweisen falschliegender Werkstücke oder zum Puffern von Werkstücken mit einer Nutzmasse (m1) und einer Gegenmasse (m2), welche über eine Lenkerfedergruppe (c1) verbunden sind, wobei der Schwingungserreger symmetrisch zur Mittelebene des Linearförderers angeordnet ist und die Gegenmasse (m2) über weitere separate Lenkerfedergruppen (c2) am Maschinenfundament (m3) angeordnet ist, dadurch gekennzeichnet, daß die weiteren separaten Lenkerfedern (c2) auf der Wirklinie befestigt sind, die durch die Schwerpunkte der Nutz- und Gegenmasse (m1, m2) verläuft, und daß der Schwingungserreger eine vertikale Wirkungsrichtung aufweist.

**2.** VIBRATIONS-LINEARFÖRDERER nach Anspruch 1, **dadurch gekennzeichnet,** daß die Auslenkung (A) der Lenkerfedergruppe (c1) an der Nutzmasse (m1) zeitgleich gegenläufig zur Auslenkung (B) der Lenkerfedergruppe (c2) an der Gegenmasse (m2) verläuft und die Auslenkung der Lenkerfedergruppe (c2) und (c1) an der gemeinsamen Gegenmasse (m2) mit gleichem Bewegungsbogen wie die Auslenkung (B) erfolgt.

**3.** VIBRATIONS-LINEARFÖRDERER nach Anspruch 2, **dadurch gekennzeichnet,** daß der Vibrations-Linearförderer mit einer Antriebsfrequenz betrieben wird, die oberhalb der Resonanzfrequenz liegt.

**4.** VIBRATIONS-LINEARFÖRDERER nach Anspruch 3, **dadurch gekennzeichnet,** daß die Fördergeschwindigkeit über die Antriebsfrequenz in sehr kleinen Sprüngen elektronisch, vorzugsweise digital, abstimmbar ist.

**5.** VIBRATIONS-LINEARFÖRDERER nach Anspruch 1 bis 3, **dadurch gekennzeichnet,** daß die Federkonstante beider Lenkergruppen (c1, c2) einen niedrigen Wert aufweist, wodurch sich eine niedrige Frequenz und damit eine hohe Amplitude der Nutzmasse (m1) ergibt, was ein weiches, schonendes und lärmarmes Fördern der Werkstücke bewirkt.

**6.** VIBRATIONS-LINEARFÖRDERER nach einem der vorhergehenden Ansprüche, **dadurch gekennzeichnet,** daß die Kraftrichtung (05) des Schwingantriebes (06,09) von der Wirklinie (04) der Nutz- und Gegenmasse um den Winkel α abweicht.

**7.** VIBRATIONS-LINEARFÖRDERER nach einem der vorhergehenden Ansprüche, **dadurch gekennzeichnet,** daß die Neigung (β1) der Lenkergruppe (c1) im Ruhezustand zur Neigung (β2) der Lenkergruppe (c2) bei unterschiedlichen Massen (m1,m2) parallel verläuft und einstellbar ausgebildet ist.

**8.** VIBRATIONS-LINEARFÖRDERER nach einem der vorhergehenden Ansprüche, **dadurch gekennzeichnet,** daß beide Lenkerfedergruppen (c1,c2) gleiche Federkonstanten und Abmessungen aufweisen.

**Claims**

**1.** A vibration linear conveyor to convey, adjust, reject misplaced work pieces or to buffer work pieces with a work load (m1) and a counter load (m2) which are connected through a group of flat springs (c1), the vibration generator being arranged symmetrically to the centre plane of the linear conveyor and the counter load (m2) being arranged through other separate groups of flat springs (c2) at the machine plate (m3), characterized in that the other separate flat springs (c2) are mounted on the active line which runs through the centre of gravity of the work load and counter load (m1, m2) and in that the vibration generator has a vertical direction of action.

**2.** A vibration linear conveyor according to claim 1, **characterized in that** the stroke (A) of the group of flat springs (c1) at the work load (m1) takes place simultaneously in the opposite direction to the stroke (B) of the group of flat springs (c2) at the counter load (m2) and that the stroke of the groups of flat springs (c2) and (c1) takes place at the common counter load (m2) with the same motion curve as the stroke (B).

**3.** vibration linear conveyor is operated with a drive frequency which is above the resonance frequency.

**4.** A virbration linear conveyor according to claim 3, **characterized in that** the conveyance speed is adjustable in very small steps electronically, preferably digitally, via the drive frequency.

**5.** A vibration linear conveyor according to claims 1 to 3, **characterized in that** the spring constant of both groups of flat springs (c1, c2) has a low value resulting in a low frequency and thus a high amplitude of the work load (m1) which results in a soft, smooth and quiet conveying of the work piece.

**6.** A vibration linear conveyor according to any one of the preceding claims, **characterized in that** the direction of force (05) of the vibration drive (06,09) deviates from the active line (04) of the work load and counter load by the angle α.

**7.** A vibration linear conveyor according to any one of the preceding claims, **characterized in that** the inclination (β1) of the group of flat springs (c1) is parallel to the inclination (β2) of the group of flat springs with different loads (m1, m2) when in quiescent condition and that the inclination can be adjusted.

**8.** A vibration linear conveyor according to any one of the preceding claims, **characterized in that** both groups of flat springs (c1, c2) have the same spring constants and dimensions.

**Revendications**

**1.** CONVOYEUR LINEAIRE A VIBRATIONS pour le transport, l'ajustement ou le rejet des pièces à usiner mal disposées ou alors pour tamponner des pièces à usiner, convoyeur dont la masse utile (m1) et la contre-masse (m2) sont reliées entre elles par un groupe de ressorts à lames (c1), dont le générateur de vibrations est disposé de façon symétrique au niveau du milieu du convoyeur linéaire et dont la contre-masse (m2) est disposée au bâti de machine (m3) au moyen d'autres groupes de ressorts à lames (c2) séparés, **caractérisé par le fait** que les autres ressorts à lames (c2) séparés sont fixés sur la ligne active traversant les centres de gravité de la masse utile et de la contre-masse (m1, m2) et que le générateur de vibrations présente une direction active verticale.

2. CONVOYEUR LINEAIRE A VIBRATIONS suivant la revendication n° 1, **caractérisé par le fait** que la course (A) du groupe de ressorts à lames (c1) au niveau de la masse (m1) et la course (B) du groupe de ressorts à lames (c2) au niveau de la contre-masse (m2) s'effectuent simultanément, mais à mouvement opposé, et que la course des groupes de ressorts à lames (c2) et (c1) au niveau de la contre-masse (m2) commune s'effectue avec un mouvement en courbe identique à celui de la course (B).

3. que le convoyeur linéaire à vibrations est entraîné d'une fréquence d'entraînement supérieure à la fréquence de résonance.

4. CONVOYEUR LINEAIRE A VIBRATIONS suivant la revendication n° 3, **caractérisé par le fait** que le réglage de la vitesse de transport s'effectue électroniquement, de préférence par voie digitale, au moyen de la fréquence d'entraînement, et qu'un réglage à avancement très faible est possible.

5. CONVOYEUR LINEAIRE A VIBRATIONS suivant les revendications 1 à 3, **caractérisé par le fait** que la flexibilité des ressorts des deux groupes à lames (c1, c2) présente une valeur plus basse, ce qui a pour conséquence une diminution de la fréquence et de ce fait une amplitude élevée de la masse utile (m1), permettant ainsi un transport doux, silencieux et avec ménagement des pièces à usiner.

6. CONVOYEUR LINEAIRE A VIBRATIONS suivant l'une des revendications susmentionnées, **caractérisé par le fait** que la direction de l'effort (05) de l'entraînement d'oscillation (06, 09) s'écarte de la ligne active (04) de la masse utile et de la contre-masse créant ainsi l'angle α.

7. CONVOYEUR LINEAIRE A VIBRATIONS suivant l'une des revendications susmentionnées, **caractérisé par le fait** que l'inclinaison (β1) du groupe de ressorts à lames (c1) en état d'arrêt est réglable et est parallèle à l'inclinaison (β2) du groupe de ressorts à lames (c2), les masses étant différentes.

8. CONVOYEUR LINEAIRE A VIBRATIONS suivant l'une des revendications susmentionnées, **caractérisé par le fait** que les deux groupes de ressorts à lames (c1, c2) présentent des flexibilités des ressorts ainsi que des dimensions identiques.

Fig.1

Fig.2

6

Fig.3

Fig.4

EP 0 578 842 B1

Fig.5

EP 0 578 842 B1